# EUROPÄISCHE PATENTANMELDUNG

(11) **EP 0 561 011 A1**
(43) Veröffentlichungstag der Anmeldung: **22.09.1993**
(21) Anmeldenummer: 92104491.3
(22) Anmeldetag: 16.03.1992
(51) Int. Cl.: F02C 7/143

(54) **Zwischengekühlte Verdichter**

(71) Anmelder: ASEA BROWN BOVERI AG, CH-5401 Baden (CH)
(72) Erfinder: Althaus, Rolf, Dr., CH-9230 Flawil (CH)

(57) **Zusammenfassung**

Bei einer Verdichtergruppe einer Gasturbogruppe wird die Zwischenkühlung der in einer ersten Verdichterstufe (4) vorverdichteten Luft in einem Zwischenkühler vorgenommen, der innerhalb des Statorgehäuses (2) und in Strömungsrichtung der Verdichterstufen plaziert ist. Dieser Verdichter hat die Form eines Doppelkegelapparats (5), wobei als Kühlungsmedium Wasser (6) in den Innenraum (13) dieses Apparats (5) eingedüst wird, wo es zur Vermischung mit der vorverdichteten Luft (16) kommt. Die Kühlung geschieht durch Verdunstung des eingedüsten Wassers (6). Verbindungsleitungen zu einem ausserhalb des Statorgehäuses (2) plazierten Zwischenkühler, und vom Zwischenkühler zum Statorgegehäuse (2), sind nicht mehr nötig.

## Beschreibung

### Technisches Gebiet

Die vorliegende Erfindung betrifft eine Verdichtergruppe gemäss Oberbegriff des Anspruchs 1. Sie betrifft auch ein Verfahren zum Betrieb einer solchen Verdichtergruppe.

### Stand der Technik

Es ist allgemein bekannt, dass die Leistungsaufnahme eines Verdichters bei gegebenem Enddruck signifikant herabgesetzt werden kann, wenn während der Verdichtung das Medium, d.h.bei Gasturbogruppen Luft, mindestens einmal zurückgekühlt wird. Zu diesem Zweck strömt die vorverdichtete Luft nach einer ersten Verdichterstufe über eine Abströmleitung in einen Zwischenkühler, in welchem durch Wärmetauschung eine Kühlung der vorverdichteten Luft stattfindet, worauf die so gekühlte Luft über eine Zuströmleitung zur zweiten Verdichterstufe rückgeführt wird.
Es ist offensichtlich, dass bei dieser zum allgemeinen Stand der Technik gehörenden Konfiguration ein anlagemässig grosser Aufwand betrieben werden muss, der sich auf die Anlagekosten nicht unerheblich auswirkt.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verdichtergruppe der eingangs genannten Art die obengenannten Nachteile zu beheben.

Der wesentliche Vorteil der Erfindung ist darin zu sehen, dass ein sonst als Vormischbrenner verwendeter Apparat als evaporativer Zwischenkühler zur Anwendung gelangt.

Bei dem hier zum Einsatz gelangenden Apparat handelt es sich um den sogenannten "Doppelkegelbrenner", wie er in EP-0321809 bekannt geworden ist. Die Abkühlung des Verdichtermediums, bei Gasturbogruppen demnach der vorverdichteten Luft, erfolgt über eine Verdampfung des in diesen Apparat zu Kühlungszwecken eingespritzten Wassers.

Dabei kommen die Vorteile dieses "Doppelkegelapparats" auch bei dieser neuen Anwendungsart voll zum tragen: Der Partialdruck des Wassers, als Kühlungsträger, kann durch die Wassertemperatur vor der Einspritzung an sich gesteuert werden; hierbei darf indessen nicht unerwähnt bleiben, dass dieser Effekt aber gering ist.

Ein weiterer Vorteil der Erfindung ist darin zu sehen, dass die gewählte Anordnung, den Apparat in der Ausströmung- bzw. Einströmungs-Achse der beiden Verdichterstufen zu plazieren, bei minimalem Druckabfall kleinste Temperaturdifferenzen im Nachlauf der Doppelkegelkonfiguration durch die Wirbelstruktur ausgleichen kann, d.h. den sogenannten "Patternfactor" auslöst. In diesem Doppelkegelapparat selbst werden heisse Strähnen im Fliehkraftfeld und im Rückströmgebiet des "Vortex-Breakdown" solange festgehalten, bis sich die Temperatur der Kernströmung auf die Umgebungstemperatur stromabwärts abgesenkt hat.

Ein weiterer Vorteil der Erfindung besteht darin, dass bei einer annularen Anordnung der Doppelkegelkonfiguration die Möglichkeit besteht, in der Wärmetauscherzone über Stützrippen ein Zwischenlager zur Spielminderung im Verdichter vorzusehen.

Vorteilhafte und zweckmässige Weiterbildungen der erfindungsgemässen Aufgabenlösung sind in den weiteren Ansprüchen gekennzeichnet.

Im folgenden wird anhand der Zeichnungen ein Ausführungsbeispiel der Erfindung näher erläutert. Alle für das unmittelbare Verständnis der Erfindung nicht erforderlichen Elemente sind fortgelassen. Die Strömungsrichtung der Medien ist mit Pfeilen angegeben.

### Kurze Beschreibung der Zeichnungen

Es zeigt:
- Fig. 1: eine Schaltung eines Doppelkegelapparats zwischen zwei Druckstufen einer Verdichtergruppe,
- Fig. 2: einen Doppelkegelapparat in perspektivischer Darstellung, entsprechend aufgeschnitten und
- Fig. 3: einen Schnitt durch den Doppelkegelapparat gemäss Fig. 2, in der Ebene II-II.

### Wege zur Ausführung der Erfindung, gewerbliche Verwertbarkeit

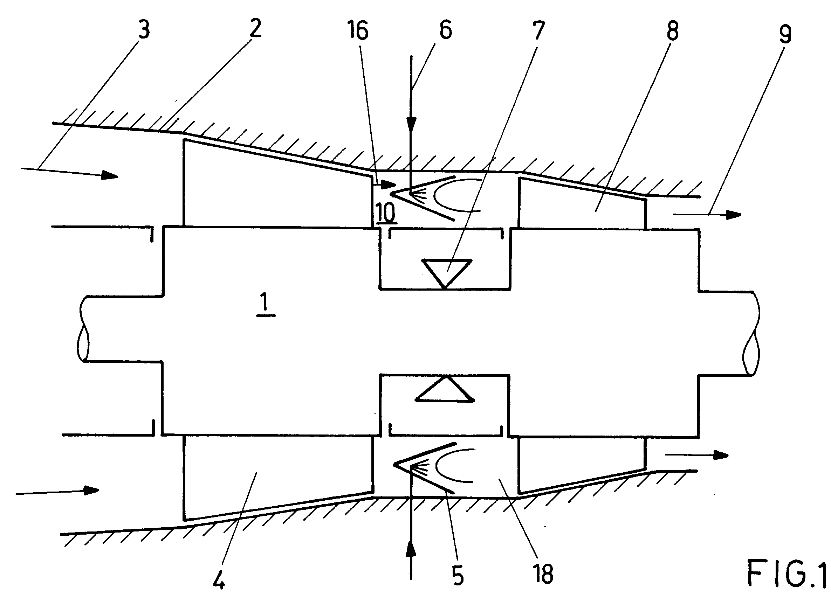

Fig.1 zeigt eine Verdichtergruppe einer Gasturbogruppe, im wesentlichen bestehend aus einem Rotor 1, einem Stator 2 und aus zwei Verdichterstufen 4 und 8. Die angesaugte Luft 3 wird in einer ersten Stufe 4, die als ND-Verdichter arbeitet, vorverdichtet. Nach Durchlauf dieser Vorverdichterstufe 4 wird diese Luft 16, an Stelle der herkömmlichen Zwischenkühlung, bei welcher die Luft durch einen ausserhalb der Verdichtergruppe wirkenden Wärmetauscher durchgeleitet wird, in eine in den Stator 2 intergrierte intermediäre Ringkammer 10, zwischen den zwei Verdichterstufen 4, 8, geleitet. Diese Ringkammer 10 ist mit einer Anzahl, dem Verfahren nach, Doppelkegelapparate 5 bestückt, die auf dem Umfang derselben plaziert sind. Der finale Zweck dieser Konfiguration besteht darin, die aus dem ND-Verdichter 4 kommenden Luft 16 durch die genannten Doppelkegelapparate 5 zu leiten, bevor sie in die als HD-Verdichter ausgelegte zweite Verdichterstufe 8 eingeleitet wird. Nachdem die Luft 9 fertig verdichtet ist, wird sie im normalen Fall in einer nicht dargestellten Brennkammer kalorisch aufbereitet. Bei der gewählten Anordnung einer Ringkammer 10 besteht die Möglichkeit, über beispielsweise Stützrippen im Bereich des Doppelkegelapparats 5 ein Zwischelager 7 zur Spielminderung in der Verdichtergruppe einzubauen. Ueber die Betriebsweise des erwähnten Doppelkegelapparats 5 wird weiter unten noch näher eingegangen. Bereits aus der schematischen Darstellung von Fig. 1 geht die Kompaktheit der vorgeschlagenen Lösung überdeutlich hervor. Die Rückkühlung der im ND-Verdichter 4 verdichteten Luft zum Zwecke einer Herabsetzung der Leistungsaufnahme der Verdichtergruppe allgemein bei gegebenem Enddruck geschieht innerhalb des Stators 2 und unmittelbar stromab der ersten Verdichterstufe 4 und stromauf der zweiten Verdichterstufe 8, so dass keine Durchführungen von Leitungen durch den Stator zu bzw. von einem aussserhalb der Verdichtergruppe wirkenden Wärmetauscher mehr nötig sind. Anzumerken bleibt zunächst, dass der Doppelkegelapparat 5 mit Wasser 6 gespiesen wird, wobei selbstverständlich am Ende dieses Brenners Vorkehrungen vorgesehen sind, welche das allenfalls nicht vollständig verdunstete Wasser durch die dort vorhanden Zentrifugalwirkung durch die Betriebsweise des Doppelkegelapparats 5 sowie durch weitere geeignte Massnahmen auszuscheiden vermögen. Die Abkühlung der vorverdichteten Luft 16 erfolgt sonach über die Verdampfung mindestens eines Teils des in den Doppelkegelapparat 5 eingespritzten Wassers 6. Dabei kann der Partialdruck des Wassers durch die Wassertemperatur vor der Einspritzung gesteuert werden, wie dies weiter oben eingehend erläutert wurde. Die dem Doppelkegelapparat 5 eigene Wirbelstruktur sorgt dafür, dass bei minimalem Druckabfall kleinste Temperaturdifferenzen ausgeglichen werden können. Das betriebsmässige Verfahren des Doppelkegelapparats 5 ermöglicht des weiteren, dass allfällige heisse Strähnen im Fliehkraftfeld und im Rückströmgebiet der sich am Ausgang des Brenners bildenden Rückströmzone (Vortex-Breakdown) solange festgehalten werden, bis sich die Temperatur der Kernströmung auf die Umgebungstemperatur stromabwärts abgesenkt hat.

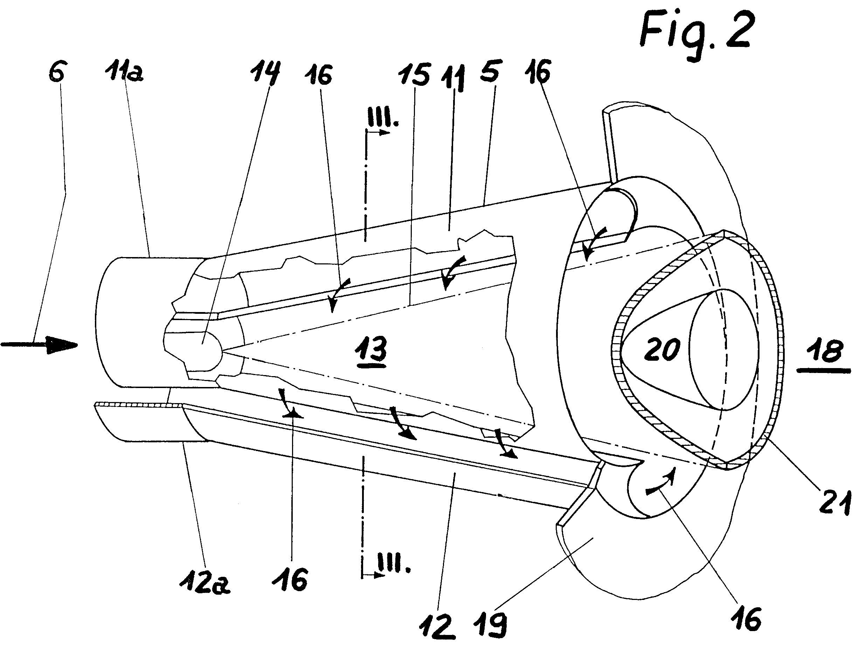

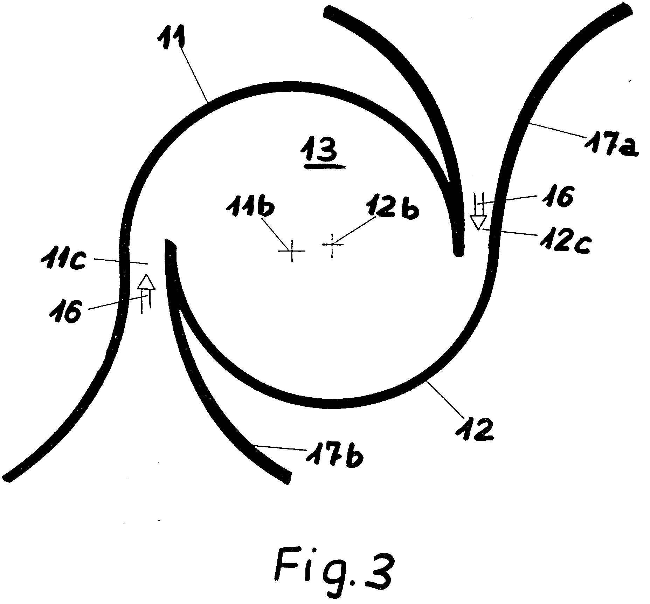

Um den Aufbau des Apparats 5 besser zu verstehen, ist es von Vorteil, wenn die Fig. 2 und 3 gleichzeitig herangezogen werden. Des weiteren, um die einzelnen Figuren nicht unnötig unübersichtlich zu gestalten, sind Teilaspekte dieses Apparats auf die einzelnen Figuren verteilt worden, wobei bei der Beschreibung des Ausführungsbespiels darauf nach Bedarf verwiesen wird.

Der Kernkörper des in Fig. 2 gezeigten Apparats 5 besteht aus zwei halben hohlen Teilkegelkörpern 11, 12, die versetzt zueinander aufeinander liegen. Die Versetzung der jeweiligen Mittelachsen schafft auf beiden Seiten in achssymmetrischer Anordnung jeweils einen tangentialen Lufteintrittsschlitz 11c, 12c (Fig. 3) frei, durch welche die oben bereits erwähnte vorverdichtete Luft 16 in den Innenraum 13 des Apparats 5, d.h. in den Kegelhohlraum, strömt. Die Kegelform der gezeigten Teilkegelkörper 11, 12 weist in Strömungsrichtung einen bestimmten festen Winkel auf. Selbstverständlich können die Teilkegelkörper 11, 12 in Strömungsrichtung eine zunehmende Kegelneigung (konvexe Form = Trompetenform) oder eine abnehmende Kegelneigung (konkave Form = Tulpenform) beschreiben. Die beiden letztgenannten Formen sind zeichnerisch nicht erfasst, da sie sich ohne weiteres vorstellen lassen. Welche Form schlussendlich zum Einsatz gelangt, hängt von den verschiedenen Parametern des hier zugrundeliegenden Prozesses ab. Vorzugsweise wird die zeichnerisch gezeigte Form zum Einsatz gelangen. Die tangentiale Breite der Lufteintrittsschlitze 11c, 12c ist ein Mass, das aus der Versetzung der beiden Mittelachsen 11b, 12b (siehe Fig. 3) zueinander resultiert. Die beiden Teilkegelkörper 11, 12 weisen je einen zylindrischen Anfangsteil 11a, 12a auf, welche, analog zu den Teilkegelkörpern 11, 12 versetzt zueinander verlaufen, so dass die tangentialen Lufteintrittsschlitze 11c, 12c über die ganze Länge des Apparats 5 vorhanden sind. Selbstverständlich kann der Doppelkegelapparat 5 rein kegelig ausgeführt sein, also ohne einen zylindrischen Anfangsteil. In diesem zylindrischen Anfangsteil ist eine Düse 14 untergebracht, welche eine Wassereindüsung in den Innenraum 13 des Apparats 5 vornimmt. Die Wassereindüsung sorgt dafür, dass die vorverdichtete Luft 16, welche über Einlaufkanäle 17a, 17b (Siehe Fig. 3) durch die tangentialen Lufteintrittsschlitze 11c, 12c in den Innnenraum 13 des Apparats 5 strömt, fortlaufend einem Kühlungsprozess unterzogen ist. Die Einbringung der benötigten Wassermenge in den Innenraum 13 des Brenners kann indessen mannigfaltig geschehen. So kann beispielsweise als Unterstützung oder als Ersatz der kopfseitigen Wassereindüsung im Bereich der tangentialen Lufteintrittsschlitze 11c 12c nicht gezeigte Leitungen vorgesehen werden, welche sich über die ganze Länge des Doppelkegelapparats 5 erstrecken und längsseitig eine Anzahl Oeffnungen aufweisen, durch welche das benötigte Wasser eingebracht werden kann. Durch die tangentiale Einströmung der Luft 16 in den Innenraum 13 des Apparats 5 entsteht eine in axialer Richtung orientierte Drallbewegung, welche ihrer Natur nach dazu geeignet ist, eine innige Vermischung mit dem eingedüsten zweiten Mediums, in unserem Fall handelt es sich um ein konisches Wasser-Spraybild 15, das zur Verdunstung gelangt und so eine Abkühlung bewirkt, zu bewerkstelligen. Dabei ist festzustellen, dass die Wirbelströmung im Zentrum an sich drallarm ist, sie weist aber einen Achsialgeschwindigkeitsüberschuss auf. Weil nun die Drallzahl in axialer Richtung stark zunimmt und am Ende des Apparats 5 den kritischen Wert, den sogenannten Breakdown-Wert, erreicht, ergibt dies in jenem Bereich eine positionsstabile Wirbelrückströmung 20. Diese Wirbelrückströmung 20 sorgt dafür, dass das durch die Düse 14 in den Innenraum 13 allenfalls überschüssige eingedüste Wasser, die aus irgendeinem Grund nicht vollständig zur Verdampfung gelangt, in der Wirbelebene 21 auszentrifugiert wird. Es können auch andere Mittel zur Auszentrifugierung des nicht verdunsteten Wassers vorgesehen werden, welche im Zwischenraum 18, stromab des Doppelkegelapparats 5 und stromauf des Hochdruck-Verdichters 8, zu plazieren sind. Der Abschluss des Zwischenkühlungskörpers wird durch eine Wand 19 gebildet, welche die Eintrittsfront der Ringkammmer 10 bildet, entlang welcher die vorgesehenen Doppelkegelapparate 5 angebracht sind.

### Bezeichnungsliste

- 1: Rotor
- 2: Stator
- 3: Angesaugte Luft
- 4: Vorverdichterstufe
- 5: Doppelkegelapparat
- 6: Wasser
- 7: Zwischenlager
- 8: Zweite Verdichterstufe
- 9: Verdichtete Luft
- 10: Ringkammer
- 11, 12: Teilkegelkörper
- 11a, 12a: Anfangsteil
- 11b, 12b: Mittelachsen
- 11c, 12c: Tangentiale Lufteintrittsschlitze
- 13: Innenraum des Apparats
- 14: Düse
- 15: Wasser-Spraybild
- 16: Vorverdichtete Luft
- 17a, 17b: Einläufkanäle
- 18: Zwischenraum
- 19: Abschlusswand
- 20: Wirbelrückströmung
- 21: Wirbelebene

## Patentansprüche

1. Verdichtergruppe einer Gasturbogruppe, im wesentlichen bestehend aus einer ersten Verdichterstufe, aus einem stromab der ersten Verdichterstufe wirkenden Zwischenkühler und aus einer stromab des Zwischenkühlers wirkenden zweiten Verdichterstufe, dadurch gekennzeichnet, dass der Zwischenkühler zwischen der ersten Verdichterstufe (4) und der zweiten Verdichterstufe (8), innerhalb des Statorgehäuses (2) und in Strömungsrichtung plaziert ist, dass der Zwischenkühler aus mindestens einem von der vorverdichteten Luft durchströmbaren Apparat (5) besteht, der mit Wasser (6) betreibbar ist.

2. Verdichtergruppe nach Anspruch 1, dadurch gekennzeichnet, dass der Apparat (5) aus mindestens zwei in Strömungsrichtung aufeinander positionierten, hohlen kegelförmigen Teilkörpern (11, 12) besteht, deren Längssymmetrieachsen (11b, 12b) zueinander radial versetzt verlaufen, dergestalt, dass über die Länge des Apparats (5) entgegengesetzte tangentiale Lufteintrittsschlitze (11c, 12c) für einen Luftstrom (16) entstehen, dass in einem von den kegelförmigen Teilkegelkörpern (11, 12) gebildeten Innenraum (13) oder in dessen Bereich mindestens eine mit Wasser (6) betreibbare Düse (14) vorhanden ist.

3. Verdichtergruppe nach Anspruch 2, dadurch gekennzeichnet, dass sich die Teilkörper (11, 12) in Strömungsrichtung unter einem festen Winkel erweitern.

4. Verdichtergruppe nach Anspruch 2, dadurch gekennzeichnet, dass die Teilkörper (11, 12) in Strömungsrichtung eine zunehmende Kegelneigung aufweisen.

5. Verdichtergruppe nach Anspruch 2, dadurch gekennzeichnet, dass die Teilkörper (11, 12) in Strömungsrichtung eine abnehmende Kegelneigung aufweisen.

6. Verfahren zum Betrieb einer Verdichtergruppe nach den Ansprüchen 1, 2, dadurch gekennzeichnet, dass in den Innenraum (13) des Apparats (5) Wasser (6) eingedüst wird, dass dieses Wasser (6) direkt mit dem Luftstrom (16) in Verbindung tritt und diesen durch Verdampfung abkühlt, dass das nicht zur Verdampfung gelangende Wasser (6) am Ausgang des Apparats (5) im Bereich einer sich dort bildenden Wirbelrückströmzone (20) ausgeschieden wird.
